(19) **Europäisches Patentamt European Patent Office Office européen des brevets**

(11) **EP 4 517 600 A1**

(12) **EUROPEAN PATENT APPLICATION**

(43) Date of publication:
05.03.2025 Bulletin 2025/10

(51) International Patent Classification (IPC):
*G06N 5/01* (2023.01)          *G06N 7/01* (2023.01)

(21) Application number: 24185946.1

(22) Date of filing: 02.07.2024

(52) Cooperative Patent Classification (CPC):
G06N 7/01; G06N 5/01

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.08.2023 JP 2023141060

(71) Applicant: Fujitsu Limited
Kawasaki-shi, Kanagawa 211-8588 (JP)

(72) Inventors:
• KONOSHIMA, Makiko
Kawasaki-shi, Kanagawa, 211-8588 (JP)
• OHKUBO, Jun
Saitama-shi, Saitama 338-8570 (JP)
• TAMURA, Hirotaka
Yokohama-shi, Kanagawa 223-0066 (JP)

(74) Representative: Hoffmann Eitle
Patent- und Rechtsanwälte PartmbB
Arabellastraße 30
81925 München (DE)

(54) **DATA PROCESSING PROGRAM, DATA PROCESSING METHOD, AND DATA PROCESSING APPARATUS**

(57)     A data processing program including instructions including: when a number of times of occurrence of a first state within a predetermined time exceeds a predetermined number of times in a solution search based on an evaluation function including a plurality of state variables, determining a number of state variables to be changed from the first state among the plurality of state variables, based on a difference between a first value of the evaluation function in a case where a value of any state variable of the state variables is changed from the first state and a second value of the evaluation function corresponding to the first state; generating a second state in which values of the state variables of the number among the plurality of state variables in the first state are changed; and continuing the solution search using the second state.

FIG. 1

EP 4 517 600 A1

## Description

FIELD

The embodiments discussed herein are related to a data processing program, a data processing method, and a data processing apparatus.

BACKGROUND

An information processing apparatus may be used for solution finding of a combinatorial optimization problem. A combinatorial optimization problem is converted into an evaluation function representing energy of an Ising model, which is a model representing a behavior of a spin of a magnetic body. An information processing apparatus searches for a combination that minimizes or maximizes an evaluation function among combinations of values of state variables included in the evaluation function. A combination of values of state variables that minimizes or maximizes an evaluation function corresponds to a ground state or an optimal solution represented by a set of state variables. As a method for obtaining an approximate solution of a combinatorial optimization problem in a practical time, there is a method in which a simulated annealing (SA) method, a replica exchange method, and the like are combined based on a Markov-chain Monte Carlo (MCMC) method.

For example, there is a proposal for an information processing apparatus that executes sequential MCMC in which state variables are selected in order of index and it is determined whether a state transition in which the value of the state variable changes is allowed. The proposed information processing apparatus increases a transition acceptance probability by correcting a change amount of energy with an offset value when the number of times of continuous determination that the value of state variable is not changed reaches a predetermined number of times.

There is also a proposal for an optimization apparatus in which, when negation of a state transition is continuously repeated a certain number of times, one state is randomly selected from a predetermined number of candidate states selected in ascending order of corresponding energy increments, and the current state is caused to transition to the selected one state.

There is a proposal for a method called variational neural annealing in which a quasiequilibrium model is annealed instead of approximate sampling by annealing a Boltzmann distribution. There is also a proposal for a quantum Monte Carlo simulation method for simulating a microscopic magnetic structure of a complex magnetic system and investigating the macroscopic physical characteristics thereof.

Japanese Laid-open Patent Publication No. 2022-174616, Japanese Laid-open Patent Publication No. 2023-49630, U.S. Patent Application Publication No. 2022/0198246, and U.S. Patent Application Publication No. 2021/0342505 are disclosed as related art.

SUMMARY

TECHNICAL PROBLEM

In a solution search based on the MCMC method, it may take time to obtain a better solution since a state transition is not continuously adopted or only a specific state is adopted.

In one aspect, an object of the present disclosure is to improve solution finding performance.

SOLUTION TO PROBLEM

According to an aspect of the embodiments, there is provided a data processing program including instructions which, when executed by a computer, cause the computer to execute processing including: when a number of times of occurrence of a first state within a predetermined time exceeds a predetermined number of times in a solution search based on an evaluation function that includes a plurality of state variables, determining a number of state variables for which value is to be changed from the first state among the plurality of state variables, based on a difference between a first value of the evaluation function in a case where a value of any state variable of the state variables is changed from the first state and a second value of the evaluation function corresponding to the first state; generating a second state in which values of the state variables of the number among the plurality of state variables in the first state are changed; and continuing the solution search using the second state.

ADVANTAGEOUS EFFECTS OF INVENTION

In one aspect, solution finding performance may be improved.

BRIEF DESCRIPTION OF DRAWINGS

FIG. 1 is a diagram for describing a data processing apparatus of a first embodiment;
FIG. 2 is a diagram illustrating a hardware example of a data processing apparatus of a second embodiment;
FIG. 3 is a diagram illustrating an example of a relationship between a state and energy;
FIG. 4 is a diagram illustrating a function example of the data processing apparatus;
FIG. 5 is a diagram illustrating a function example of a replica processing unit;
FIG. 6 is a flowchart illustrating a solution search example of the replica processing unit;
FIG. 7 is a flowchart illustrating an exchange control example;
FIG. 8 is a diagram illustrating a selection example of a flip target spin;
FIG. 9 is a flowchart illustrating a modification example of spin flip processing; and
FIG. 10 (i.e., FIGs. 10A and 10B) is a diagram illustrating an example of an experiment result.

DESCRIPTION OF EMBODIMENTS

Hereinafter, the present embodiments will be described with reference to the drawings.

[First Embodiment]

A first embodiment will be described.

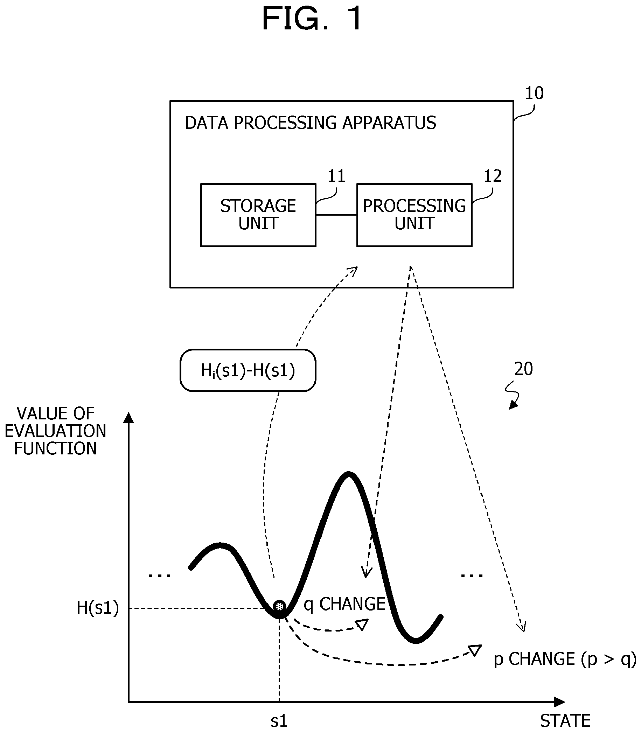

FIG. 1 is a diagram for describing a data processing apparatus of the first embodiment.
A data processing apparatus 10 is used for solution finding of a combinatorial optimization problem based on an MCMC method. In solution finding of a combinatorial optimization problem, for example, an SA method, a replica exchange method, or the like is used. The replica exchange method is also referred to as an exchange Monte Carlo method. The data processing apparatus 10 includes a storage unit 11 and a processing unit 12.
The storage unit 11 may be a volatile semiconductor memory such as a random-access memory (RAM) or may be a non-volatile storage such as a hard disk drive (HDD) or a flash memory. For example, the processing unit 12 is a processor such as a central processing unit (CPU), a graphics processing unit (GPU), or a digital signal processor (DSP). The processing unit 12 may include an application-specific electronic circuit such as an application-specific integrated circuit (ASIC) or a field-programmable gate array (FPGA). The processing unit 12 may be a processor that executes a program stored in a memory such as a RAM (which may be the storage unit 11). A set of a plurality of processors may be referred to as a "multiprocessor" or simply a "processor".
In the following description, an example is given in which the processing unit 12 searches for a solution. However, a search unit realized by an FPGA, a GPU, or the like may search for a solution according to an instruction from the processing unit 12 and return a search result to the processing unit 12. In such case, the search unit may be included in the data processing apparatus 10, or may be included in another apparatus that communicates with the data processing apparatus 10.
A combinatorial optimization problem is formulated by a predetermined evaluation function, and is replaced with, for example, a problem that minimizes the value of the evaluation function, for example, an evaluation value. An evaluation function may be referred to as an objective function or an energy function. An evaluation function includes a plurality of state variables. For example, a state variable is a binary variable that takes a value of 0 or 1. A value that may be taken by a state variable may be {1, -1}, or may be another real number. A state variable may also be referred to as a bit or a spin.
A solution to a combinatorial optimization problem is represented by the values of a plurality of state variables. The value of an evaluation function indicates energy of an Ising model. A solution that minimizes the value of an evaluation function represents a ground state of an Ising model, and corresponds to an optimal solution to a combinatorial optimization problem.
For example, an Ising-type evaluation function is represented by formula (1).

$$H(\boldsymbol{s}) = -\sum_{i=1}^{N}\sum_{j=1}^{N} W_{ij} s_i s_j - \sum_{i=1}^{N} b_i s_i \qquad (1)$$

State vector s has a plurality of state variables as elements, and represents a state of an Ising model. Formula (1) is an evaluation function formulated in a quadratic unconstrained binary optimization (QUBO) format. In a case of a problem of maximizing energy, a sign of the evaluation function is to be reversed. However, the evaluation function does not have to be in a quadratic form, and may be in a cubic or higher form.

The first term on the right side of formula (1) adds up the products of the values of two state variables and a weight coefficient without omission and duplication for all combinations of two state variables that are selectable from all state variables. Subscripts i and j are indices of the state variables. $s_i$ is an i-th state variable. $s_j$ is a j-th state variable. N is the total number of state variables. $W_{ij}$ is a weight between the i-th state variable and the j-th state variable or a coupling coefficient indicating the strength of coupling. $W_{ij} = W_{ji}$, and $W_{ii} = 0$.

The second term on the right side of formula (1) is a sum of the products of a bias for each of all state variables and the value of a state variable. $b_i$ indicates a bias for the i-th state variable. Problem information including a weight coefficient, a bias, and the like included in an evaluation function is stored in the storage unit 11.

When the value of state variable $s_i$ changes to $1 - s_i$, the increase amount of state variable $s_i$ may be represented as $\Delta s_i = (1 - s_i) - s_i = 1 - 2s_i$. Therefore, change amount $\Delta H_i$ of energy due to a change in state variable $s_i$ for evaluation function H(s) is represented by formula (2).

$$\Delta H_i = H(\boldsymbol{s})\Big|_{s_i \to 1-s_i} - H(\boldsymbol{s})$$
$$= -\Delta s_i \left( \sum_j W_{ij} s_j + b_i \right)$$
$$= -\Delta s_i h_i \tag{2}$$
$$= \begin{cases} -h_i & for \ \ s_i = 0 \to 1 \\ +h_i & for \ \ s_i = 1 \to 0 \end{cases}$$

$h_i$ is referred to as a local field, and is represented by formula (3). A local field may also be referred to as a local field (LF).

$$h_i = \sum_j W_{ij} s_j + b_i \tag{3}$$

According to formula (2), when the signs of $\Delta s_i$ and $(\Sigma W_{ij} s_j + b_i)$ agree, the energy decreases. For example, the processing unit 12 calculates, for each of a plurality of state variables, a change amount of energy due to a change in the value of one state variable among the plurality of state variables, and stochastically and preferentially accepts the change in which energy decreases.

At this time, in a case of falling into a local solution, it is impossible to escape from the local solution with a steepest descent method. Accordingly, the processing unit 12 uses a Metropolis method or a Gibbs method for determination of a transition probability from a certain state to a next state due to changing of a certain state variable. For example, the processing unit 12 also stochastically allows a change in which the value of an evaluation function increases, according to comparison between the change amount of the value of the evaluation function and a thermal noise value. A thermal noise value is obtained based on a temperature value or a random number. As the temperature value increases, an amplitude of the thermal noise value increases. As the amplitude of the thermal noise value increases, a state transition with a large increase amount of the value of the evaluation function is more likely to be allowed.

For example, in the case of the Metropolis method, probability $A_i$ of accepting a change in the value of a state variable of energy change $\Delta H_i$ is represented as $A_i = \min[1, \exp(-\beta \cdot \Delta H_i)]$. $\beta$ is a reciprocal number of temperature value T (T > 0) ($\beta = 1/T$), and is referred to as an inverse temperature. The min operator indicates that a minimum value of argument is taken.

The processing unit 12 compares a uniform random number u satisfying 0 < u < 1 with $A_i$ for a certain index i, and when $u < A_i$, accepts a change in the value of state variable $s_i$ and changes the value of state variable $s_i$. When not $u < A_i$, the processing unit 12 does not accept a change in the value of state variable $s_i$ and does not change the value of state variable $s_i$. According to the formula of probability $A_i$, as $\Delta H_i$ has a larger value, $A_i$ is smaller. As $\beta$ is smaller, for example, T is lager, a state transition in which $\Delta H_i$ is large is more likely to be allowed.

For example, in the case where the Metropolis method is used, the processing unit 12 may perform transition determination by using a determination formula of $\ln(u) * T \le -\Delta H_i$. $\ln(u) * T$ corresponds to a thermal noise value. The processing unit 12 allows a change in the value of a corresponding state variable when energy change $\Delta H_i$ satisfies the

determination formula for uniform random number u. The processing unit 12 does not allow a change in the value of a corresponding state variable when energy change $\Delta H_i$ does not satisfy the determination formula for uniform random number u.

In the SA method, the processing unit 12 decreases the amplitude of a thermal noise value by gradually changing a temperature value from the maximum temperature value to the minimum temperature value, and causes the state of an Ising model to converge to the ground state or a state close to the ground state. In the replica exchange method, the processing unit 12 repeats a procedure of independently executing MCMC for each of a plurality of temperature values, exchanging the states obtained at each temperature value at a predetermined timing, and continuing MCMC with the exchanged states as initial solutions, and extracts a good solution obtained in the process.

In a solution search by the processing unit 12, a state transition is delayed in the case of falling into a local solution, and it may take time until an optimal solution or an approximate solution close to the optimal solution is obtained. Accordingly, the processing unit 12 performs the following processing in a solution search. For example, the following processing may be executed in a solution search in the SA method or may be executed in a solution search corresponding to one temperature value in the replica exchange method.

In a solution search based on an evaluation function including a plurality of state variables, the processing unit 12 detects that the number of times of occurrence of a first state within a predetermined time exceeds a predetermined number of times. The predetermined time is determined in advance. Detection of the number of times of occurrence of the first state within a predetermined time exceeding a predetermined number of times may also be referred to as detection of the number of times of occurrence of the first state per unit time, for example, the occurrence frequency, exceeding a predetermined value. One time of occurrence of the first state is that a state after one time of trial of a state transition in a solution search is the first state. At this time, a state before the one time of trial may be the first state or a state different from the first state.

For example, the processing unit 12 may count the number of times a state transition is not continuously adopted, for example, the number of times of continuous rejection, and perform detection of the number of times of occurrence of the first state within a predetermined time exceeding a predetermined number of times according to whether the number of times of continuous rejection exceeds the predetermined number of times. In this case, the first state occurs for the number of times of trial corresponding to the number of times of continuous rejection. Time spent for the number of times of trial corresponding to the predetermined number of times corresponds to the predetermined time.

Alternatively, in a case of transitioning to the first state, when the first state occurs again within a predetermined time from the timing of the transition, the processing unit 12 may detect that the number of times of occurrence exceeds a predetermined number of times by counting the number of times of occurrence.

In a solution search, when the number of times of occurrence of the first state within a predetermined time exceeds a predetermined number of times, the first state is estimated to be a local solution. Accordingly, the processing unit 12 may detect that a search falls into a local solution by detection of the number of times of occurrence of the first state within a predetermined time exceeding a predetermined number of times.

When it is detected that the number of times of occurrence of the first state within a predetermined time exceeds a predetermined number of times, the processing unit 12 performs the following processing. The processing unit 12 determines the number of state variables for which value is to be changed from the first state, based on a difference between a first value of an evaluation function in a case where the value of any state variable is changed from the first state and a second value of the evaluation function corresponding to the first state. The processing unit 12 generates a second state in which the values of state variables of the number in the first state are changed, and continues the solution search using the second state. In the solution search using the second state, the solution search is restarted from the second state.

Graph 20 illustrates a relationship between a state and the value of an evaluation function. The horizontal axis of graph 20 is a state. The vertical axis of graph 20 is the value of an evaluation function. Although a state is represented in multiple dimensions by the values of a plurality of state variables, a state is plotted on the horizontal axis for convenience in graph 20.

State s1 is an example of the first state. State s1 corresponds to a local solution. In a solution search, the processing unit 12 detects that the number of times of occurrence of state s1 within a predetermined time exceeds a predetermined number of times. The processing unit 12 calculates index value $\zeta$ based on a difference between a first value ($H_i(s1)$) of an evaluation function in a case where the value of any state variable in state s1 is changed and a second value ($H(s1)$) of the evaluation function corresponding to state s1. Index value $\zeta$ is a statistical value of the difference. For example, the processing unit 12 calculates a first value for a case where the value of each of a predetermined number of state variables is changed, and obtains $\zeta$ as a statistical value of the predetermined number of first values. Index value $\zeta$ is an index representing the gentleness or steepness of a change in the value of an evaluation function around the first state. As one example, $\zeta$ is calculated by formula (4).

$$\zeta(\boldsymbol{s}) = \frac{1}{N} \sum_{i=1}^{N} \Big( H_i(\boldsymbol{s}) - H(\boldsymbol{s}) \Big) \tag{4}$$

$H_i(s)$ is a value of an evaluation function corresponding to a state obtained by changing the value of the state variable of index i for state s. In the example of formula (4), $\zeta(s)$ is an average value of differences between a first value of an evaluation function in a case where the value of any state variable in state s is changed and a second value of the evaluation function corresponding to state s.

As another example, the processing unit 12 may calculate the maximum value of the difference between the first value and the second value as $\zeta$. Alternatively, the processing unit 12 may calculate the minimum value of the difference between the first value and the second value as $\zeta$.

As still another example, for $\Sigma$ in formula (4), the processing unit 12 may take a sum for a part of all indices instead of taking a sum for all indices. For example, the processing unit 12 may calculate $\zeta$ by formula (5) or formula (6).

$$\zeta(\boldsymbol{s}) = \frac{c}{N} \sum_{i=1,c,2c,3c,\ldots,N} \Big( H_i(\boldsymbol{s}) - H(\boldsymbol{s}) \Big) \tag{5}$$

$$\zeta(\boldsymbol{s}) = \frac{c}{N} \sum_{i=R} \Big( H_i(\boldsymbol{s}) - H(\boldsymbol{s}) \Big) \tag{6}$$

R in formula (6) is a random number belonging to the range [1, N] of the values of index. c is a constant determined in advance according to the number of indices for which a sum is to be obtained. In a case where calculation of $\zeta$ is performed for state s1, the processing unit 12 sets s = s1 in the above formula.

For example, the processing unit 12 determines the number of state variables for which value is to be changed by a predetermined determination formula using $\zeta$. For example, a determination formula is represented as $\zeta(s)/|H(s)| < \theta$energy. $\theta$energy is a threshold determined in advance. $|H(s)|$ is an absolute value of H(s). When $\zeta(s)/|H(s)| < \theta$energy, the processing unit 12 determines that the values of p state variables are to be changed. For example, p is an integer of three or larger. When $\zeta(s)/|H(s)| \geq \theta$energy, the processing unit 12 determines that q state variables are to be changed, q being smaller than p. For example, q is an integer that is two or larger and smaller than p. The values of p and q are determined in advance. In a case where determination is performed for state s1, the processing unit 12 sets s = s1 in the determination formula.

The processing unit 12 changes the values of the determined number of state variables in state s1, and continues the solution search. The processing unit 12 may randomly select the determined number of state variables to be changed and change the values of the selected state variables. Alternatively, the processing unit 12 may select a state variable to be changed based on the value of an evaluation function in a case where the state variable is changed, and change the value of the selected state variable.

Division of $\zeta(s)$ by $|H(s)|$ corresponds to normalization of $\zeta(s)$. The method of normalization by dividing $\zeta(s)$ by $|H(s)|$ is an example. The processing unit 12 may normalize $\zeta(s)$ by a method other than dividing $\zeta(s)$ by $|H(s)|$.

For example, when $\zeta(s1)/|H(s1)| < \theta$energy, it means that an evaluation function is relatively gentle around state s1, for example, a change in the value of the evaluation function is small. When $\zeta(s1)/|H(s1)| \geq \theta$energy, it means that the evaluation function is relatively steep around state s1, for example, a change in the value of the evaluation function is large.

When it is determined that the evaluation function is gentle around state s1, the processing unit 12 changes the values of a larger number (p) of state variables than in the case where the evaluation function is steep around state s1. Accordingly, in the subsequent solution search, the processing unit 12 makes it hardly return to state s1 and makes it possible to efficiently escape from the local solution.

On the other hand, when it is determined that the evaluation function is steep around state s1, the processing unit 12 changes the values of a smaller number (q) of state variables than in the case where the evaluation function is gentle around state s1. Accordingly, the processing unit 12 makes it possible to efficiently escape from the local solution such that the state is not transitioned to a state separated from state s1 more than appropriate. For example, in the case where the evaluation function is steep around state s1, there is a possibility that a better solution (another energy valley) exists in a state relatively close to state s1, and the possibility of missing such a better solution in the subsequent solution search is reduced.

According to the data processing apparatus 10, in a solution search based on an evaluation function including a plurality of state variables, it is detected that the number of times of occurrence of a first state within a predetermined time exceeds a threshold. The number of state variables for which value is to be changed from the first state is determined, based on a difference between a first value of an evaluation function in a case where the value of any state variable of the plurality of state variables is changed from the first state and a second value of the evaluation function corresponding to the first state. A second state is generated in which the values of state variables of the number among the plurality of state variables in the first state are changed. The solution search is continued using the second state.

Accordingly, the data processing apparatus 10 may improve solution finding performance. As described before, the data processing apparatus 10 enables efficient escape from a local solution. As a result, the data processing apparatus 10 may increase the possibility of reaching an optimal solution or an approximate solution close to the optimal solution in a relatively short time. In this way, the data processing apparatus 10 may speed up solution finding.

[Second Embodiment]

Next, a second embodiment will be described.

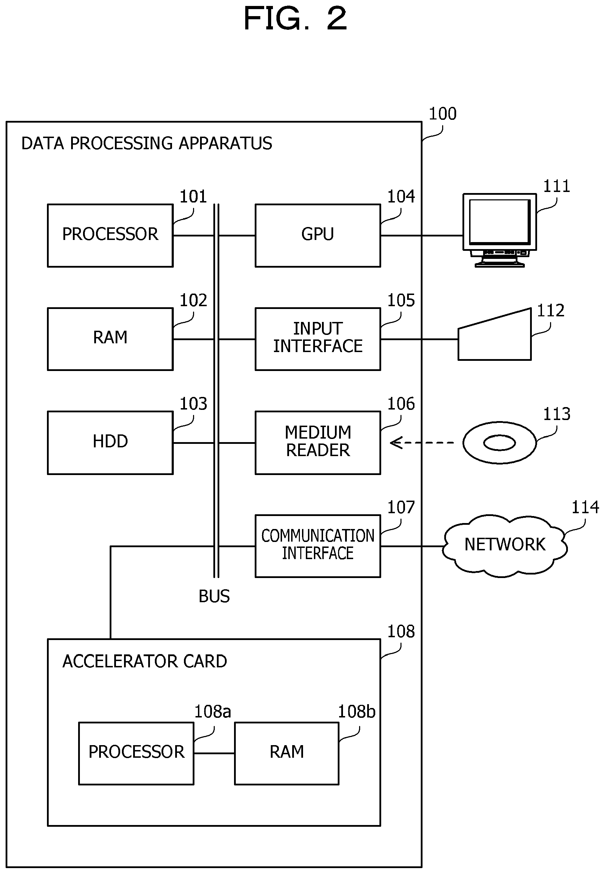

FIG. 2 is a diagram illustrating a hardware example of a data processing apparatus of the second embodiment.

A data processing apparatus 100 includes a processor 101, a RAM 102, an HDD 103, a GPU 104, an input interface 105, a medium reader 106, a communication interface 107, and an accelerator card 108. These units included in the data processing apparatus 100 are coupled to a bus inside the data processing apparatus 100.

The processor 101 is an arithmetic device that executes instructions of a program. For example, the processor 101 is a CPU. The processor 101 loads at least a part of a program or data stored in the HDD 103 into the RAM 102, and executes the program. The processor 101 may include a plurality of processor cores. The data processing apparatus 100 may include a plurality of processors. The processing to be described below may be executed in parallel by using a plurality of processors or processor cores. A set of a plurality of processors may be referred to as a "multiprocessor" or simply a "processor".

The RAM 102 is a volatile semiconductor memory that temporarily stores a program to be executed by the processor 101 and data to be used for arithmetic operation by the processor 101. The data processing apparatus 100 may include a memory of a type other than the RAM, and may include a plurality of memories.

The HDD 103 is a non-volatile storage device that stores data and programs of software such as an operating system (OS), middleware, and application software. The data processing apparatus 100 may include other types of storage devices such as a flash memory or a solid-state drive (SSD), and may include a plurality of non-volatile storage devices.

The GPU 104 outputs an image to a display 111 coupled to the data processing apparatus 100 in accordance with an instruction from the processor 101. As the display 111, an arbitrary type of display such as a cathode ray tube (CRT) display, a liquid crystal display (LCD), a plasma display, or an organic electro-luminescence (OEL) display may be used.

The input interface 105 acquires an input signal from an input device 112 coupled to the data processing apparatus 100, and outputs the input signal to the processor 101. As the input device 112, a pointing device such as a mouse, a touch panel, a touchpad, or a trackball, a keyboard, a remote controller, a button switch, or the like may be used. A plurality of types of input devices may be coupled to the data processing apparatus 100.

The medium reader 106 is a reading device that reads programs and data recorded in a recording medium 113. As the recording medium 113, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 106 copies a program or data read from the recording medium 113 to another recording medium such as the RAM 102 or the HDD 103. For example, the read program is executed by the processor 101. The recording medium 113 may be a portable-type recording medium, and may be used to distribute programs and data. The recording medium 113 and the HDD 103 may be referred to as a computer-readable recording medium.

The communication interface 107 is coupled to a network 114, and communicates with another information processing apparatus via the network 114. The communication interface 107 may be a wired communication interface coupled to a wired communication device such as a switch or a router, or may be a wireless communication interface coupled to a wireless communication device such as a base station or an access point.

The accelerator card 108 is a hardware accelerator that searches for a solution to a problem represented by an Ising-type energy function of formula (1) by using the MCMC method. By performing the MCMC method at a fixed temperature or the replica exchange method in which the states of an Ising model are exchanged between a plurality of temperatures, the accelerator card 108 may be used as a sampler that samples a state following a Boltzmann distribution at the corresponding temperature. For solution finding of a combinatorial optimization problem, the accelerator card 108 executes the replica exchange method or processing of annealing such as the SA method in which a temperature value is gradually decreased. The replica exchange method is also referred to as an exchange Monte Carlo method or a parallel tempering (PT) method.

The SA method is a method of efficiently finding an optimal solution by decreasing a temperature value used during the sampling from a high temperature to a low temperature, for example, increasing inverse temperature β. Since a state changes to some extent even in a case where the low temperature side, for example, β is large, there is a high possibility that a good solution may be found even when the temperature value is decreased rapidly. For example, in a case where the SA method is used, the accelerator card 108 repeats the operation of decreasing a temperature value after repeating a trial of state transition at a certain temperature value a certain number of times.

The replica exchange method is a method of independently executing the MCMC method using a plurality of temperature values. An independent arithmetic operation resource for executing the MCMC method is referred to as a replica. In the replica exchange method, states or temperature values are exchanged as appropriate for states obtained by a plurality of replicas corresponding to a plurality of temperature values. In the replica exchange method, a good solution may be found efficiently by searching a narrow range of a state space by MCMC at a low temperature and searching a wide range of the state space by MCMC at a high temperature. In a case where the replica exchange method is used, the accelerator card 108 repeats the operation of performing trials of state transition for a plurality of replicas in parallel and, every time a certain number of times of trial is performed, exchanging states or temperature values by a predetermined exchange probability for a pair of replicas with adjacent temperature values. As described above, the data processing apparatus 100 or a device such as the accelerator card 108 that solves an Ising problem may be referred to as an Ising machine.

The accelerator card 108 includes a processor 108a and a RAM 108b. The processor 108a realizes a solution search function in the accelerator card 108. For example, the processor 108a is a dedicated processor for solution search such as a GPU, an FPGA, or an ASIC. The RAM 108b holds data to be used for a solution search in the processor 108a and a solution searched for by the processor 108a. The data processing apparatus 100 may include a plurality of accelerator cards.

Each of the RAM 102 and the RAM 108b may be a dynamic RAM (DRAM) or a static RAM (SRAM), or may include both of them. The processor 101 or the processor 108a corresponds to the processing unit 12 of the first embodiment. The RAM 102 or the RAM 108b corresponds to the storage unit 11 of the first embodiment. The HDD 103 may correspond to the storage unit 11.

Hardware that searches for a solution to a problem in an Ising-format, such as the data processing apparatus 100 or the accelerator card 108, may be referred to as an Ising machine, a Boltzmann machine, or the like. Hereinafter, as an example of a solution search method, the case where the replica exchange method is used will be described. However, the data processing apparatus 100 may use another method such as the SA method instead of the replica exchange method.

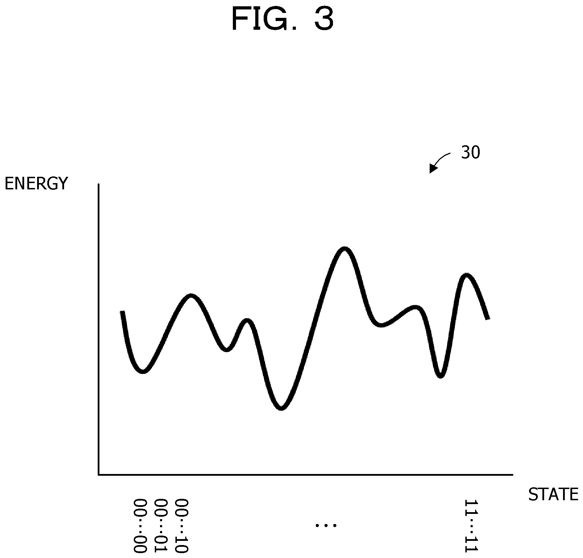

FIG. 3 is a diagram illustrating an example of a relationship between a state and energy.

Graph 30 illustrates an example of a relationship between a state represented by a plurality of spins and energy calculated by an energy function. The horizontal axis of graph 30 indicates a state. The vertical axis of graph 30 indicates energy. Although a state is represented in multiple dimensions by a plurality of spins, each state is plotted on the horizontal axis for convenience. A change amount of the energy function may be relatively small or relatively large in the vicinity of a certain state.

Accordingly, in a case where it is estimated that a search falls into a local solution, the data processing apparatus 100 calculates ζ as an index value indicating the depth/shallowness or steepness/gentleness of the energy landscape near the local solution, and makes it possible to efficiently escape from the local solution based on ζ.

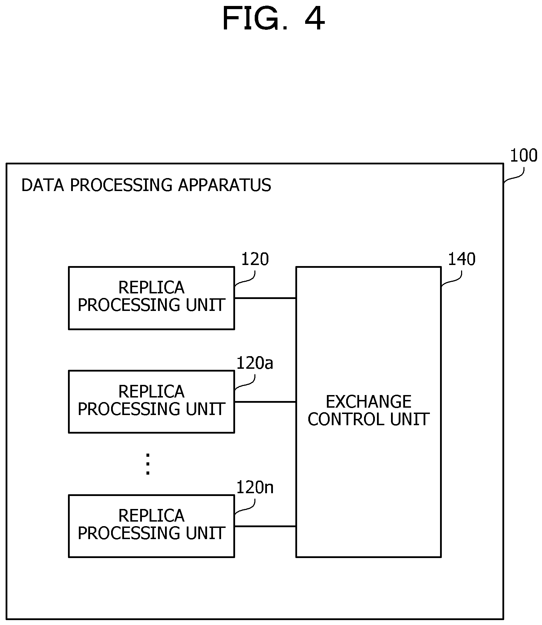

FIG. 4 is a diagram illustrating a function example of the data processing apparatus.

The data processing apparatus 100 includes replica processing units 120, 120a, ..., and 120n, and an exchange control unit 140. The replica processing units 120, 120a, ..., and 120n, and the exchange control unit 140 are realized by the processor 108a. The replica processing units 120, 120a, ..., and 120n, and the exchange control unit 140 may be realized by the processor 101 executing a program stored in the RAM 102.

The replica processing units 120, 120a, ..., and 120n are search units that execute MCMC respectively at different temperature values in solution finding of a combinatorial optimization problem. The replica processing units 120, 120a, ..., and 120n execute MCMC in parallel independently from each other. A replica processing unit may be simply referred to as a replica.

At a predetermined timing, the exchange control unit 140 controls the exchange of states between a pair of replica processing units for which adjacent temperature values are set. For a pair of replica processing units with adjacent temperature values, the exchange control unit 140 may exchange the temperature values instead of states.

For example, the data processing apparatus 100 performs a solution search for a certain period of time using the replica processing units 120, 120a, ..., and 120n, and the exchange control unit 140, and outputs a solution with the lowest energy obtained by the solution search as a final solution.

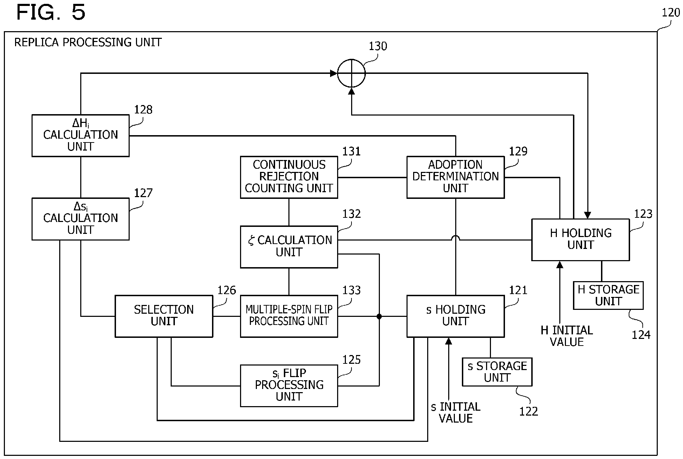

FIG. 5 is a diagram illustrating a function example of the replica processing unit.

The replica processing unit 120 includes an s holding unit 121, an s storage unit 122, an H holding unit 123, an H storage unit 124, an $s_i$ flip processing unit 125, a selection unit 126, a $\Delta s_i$ calculation unit 127, a $\Delta H_i$ calculation unit 128, an adoption determination unit 129, an addition unit 130, a continuous rejection counting unit 131, a ζ calculation unit 132, and a multiple-spin flip processing unit 133.

A storage area of the RAM 108b is used for the s storage unit 122 and the H storage unit 124. The s holding unit 121, the H holding unit 123, the $s_i$ flip processing unit 125, the selection unit 126, the $\Delta s_i$ calculation unit 127, the $\Delta H_i$ calculation unit 128, the adoption determination unit 129, the addition unit 130, the continuous rejection counting unit 131, the $\zeta$ calculation unit 132, and the multiple-spin flip processing unit 133 are realized by the processor 108a.

The s holding unit 121 acquires an initial value of state s input by a user, and stores the initial value in the s storage unit 122. When a determination result indicating that a flip of a target spin is to be adopted is received from the adoption determination unit 129, the s holding unit 121 updates state s by flipping the target spin stored in the s storage unit 122. In the example of FIG. 5, state s indicates the state of the replica processing unit 120. Although the state of each replica processing unit is distinguished by replica number m as in s(m), the state of the replica processing unit 120 is simply represented as s herein. The s holding unit 121 supplies the current state s stored in the s storage unit 122 to the $s_i$ flip processing unit 125, the $\Delta s_i$ calculation unit 127, the $\zeta$ calculation unit 132, and the multiple-spin flip processing unit 133.

The s storage unit 122 stores state s.

The H holding unit 123 acquires an initial value of energy H corresponding to state s input by a user, and stores the initial value in the H storage unit 124. When a determination result indicating that a flip of a target spin is to be adopted is received from the adoption determination unit 129, the H holding unit 123 acquires a calculation result of $H + \Delta H_i$ by the addition unit 130, and updates energy H stored in the H storage unit 124 to $H = H + \Delta H_i$. The H holding unit 123 supplies the current energy H stored in the H storage unit 124 to the addition unit 130 and the $\zeta$ calculation unit 132.

The H storage unit 124 stores energy H corresponding to state s. Energy H is a value calculated based on formula (1).

The $s_i$ flip processing unit 125 obtains candidate state s' obtained by flipping the i-th spin $s_i$ for state s, and supplies candidate state s' to the selection unit 126. Candidate state s' is a state of a transition destination candidate for state s.

The selection unit 126 selects candidate state s' supplied by any one of the $s_i$ flip processing unit 125 and the multiple-spin flip processing unit 133, and supplies candidate state s' to the $\Delta s_i$ calculation unit 127. For example, in a case where the number of times of continuous rejection by the adoption determination unit 129 counted by the continuous rejection counting unit 131 to be described later exceeds a threshold, the selection unit 126 selects candidate state s' supplied by the multiple-spin flip processing unit 133. In other cases, the selection unit 126 selects candidate state s' supplied by the $s_i$ flip processing unit 125. For the selected candidate state s', the selection unit 126 supplies, to the s holding unit 121, an index indicating the spin of a flip candidate target from state s.

The $\Delta s_i$ calculation unit 127 calculates difference $\Delta s_i$ between state s and candidate state s', and supplies difference $\Delta s_i$ to the $\Delta H_i$ calculation unit 128. In a case where a plurality of spins is flip candidates, the $\Delta s_i$ calculation unit 127 is to calculate $\Delta s_i$ for each index i of a flip candidate.

The $\Delta H_i$ calculation unit 128 calculates $\Delta H_i$ based on formula (2), and supplies $\Delta H_i$ to the adoption determination unit 129 and the addition unit 130. In the case where a plurality of spins is flip candidates, the $\Delta H_i$ calculation unit 128 calculates $\Delta H_i$ for each index i, calculates a value obtained by taking a sum of $\Delta H_i$ for i of a flip candidate, and supplies the value to the adoption determination unit 129 and the addition unit 130.

The adoption determination unit 129 performs adoption determination of a state transition by the Metropolis method based on $\Delta H_i$. As described before, in the Metropolis method, probability $A_i$ of accepting a change in the value of a state variable of energy change $\Delta H_i$ is represented as $A_i = \min[1, \exp(-\beta \cdot \Delta H_i)]$. The adoption determination unit 129 supplies a result of adoption determination to the s holding unit 121, the H holding unit 123, and the continuous rejection counting unit 131.

In the case where a plurality of spins is flip candidates, the adoption determination unit 129 performs adoption determination of a state transition by the Metropolis method based on a value obtained by taking a sum of $\Delta H_i$ for i of a flip candidate. However, in the case where a plurality of spins is flip candidates, the adoption determination unit 129 may determine that a state transition by flipping of the plurality of spins is adopted, regardless of the adoption determination.

The addition unit 130 obtains updated energy $H' = H + \Delta H_i$ by adding $\Delta H_i$ calculated by the $\Delta H_i$ calculation unit 128 and H supplied from the H holding unit 123, and supplies H' to the H holding unit 123.

The continuous rejection counting unit 131 counts the number of times that a state transition is continuously rejected, for example, the number of times of continuous rejection $\theta$num, based on an adoption determination result of state transition by the adoption determination unit 129.

Although the number of times of continuous rejection is counted by the continuous rejection counting unit 131 in this example, other examples are also conceivable.

When the number of times of continuous rejection $\theta$num reaches threshold $\theta$step, the $\zeta$ calculation unit 132 calculates index value $\zeta$. Threshold $\theta$step is determined in advance. The fact that the number of times of continuous rejection $\theta$num reaches $\theta$step means that a search falls into a local solution. For example, by formula (4), the $\zeta$ calculation unit 132 may calculate, as $\zeta$, an average value of differences between energy $H_i(s)$ in a state in which the value of one state variable of state s is changed and the current energy H(s).

Alternatively, the $\zeta$ calculation unit 132 may calculate the maximum value of the difference between $H_i(s)$ and H(s)

as $\zeta$. The $\zeta$ calculation unit 132 may calculate the minimum value of the difference between $H_i(s)$ and $H(s)$ as $\zeta$.

As still another example, as represented by formula (5), the $\zeta$ calculation unit 132 may calculate $\zeta$ by using every c indexes. As represented by formula (6), the $\zeta$ calculation unit 132 may calculate $\zeta$ by using a plurality of random numbers R in the section [1, N].

The $\zeta$ calculation unit 132 may sort $H_i(s)$ used in formula (5), formula (6), or the like, and select d $H_i(s)$ from the largest one and calculate $\zeta$. d is an integer that is two or larger and smaller than N. In this case, the d $H_i(s)$ are selected as targets of a mountain of energy to get over. Alternatively, the $\zeta$ calculation unit 132 may calculate $\zeta$ by selecting d values in ascending order of $H_i(s)$. For example, the $\zeta$ calculation unit 132 may calculate, as $\zeta$, an average value of differences between each of d selected $H_i(s)$ and the current energy $H(s)$.

As with the $\Delta H_i$ calculation unit 128, the $\zeta$ calculation unit 132 may perform calculation of an energy difference based on formula (2).

The multiple-spin flip processing unit 133 determines the number of spins to be flipped according to comparison between $\zeta$/(current energy H) and threshold $\theta$energy. As an example, when $\zeta/|H| < \theta$energy, the multiple-spin flip processing unit 133 sets the number of spins to be flipped to x (x > 2). For example, x = N/2 for the total number N of spins. On the other hand, when $\zeta/|H|$ is equal to or larger than $\theta$energy, the multiple-spin flip processing unit 133 sets the number of spins to be flipped to two. Threshold $\theta$energy is determined in advance. Hereinafter, H > 0, and $\zeta/|H|$ is simply represented as $\zeta$/H.

The multiple-spin flip processing unit 133 generates candidate state s' by randomly selecting the determined number of spins and flipping the selected spins in state s. The multiple-spin flip processing unit 133 supplies the generated candidate state s' to the selection unit 126.

A storage area of the RAM 102 may be used for the s storage unit 122 and the H storage unit 124. The s holding unit 121, the H holding unit 123, the $s_i$ flip processing unit 125, the selection unit 126, the $\Delta s_i$ calculation unit 127, the $\Delta H_i$ calculation unit 128, the adoption determination unit 129, the addition unit 130, the continuous rejection counting unit 131, the $\zeta$ calculation unit 132, and the multiple-spin flip processing unit 133 may be realized by a program stored in the RAM 102 being executed by the processor 101.

The replica processing units 120a, ..., and 120n also have functions similar to those of the replica processing unit 120. $\zeta = \zeta(s(m))$ and H = H(s(m)) are individually calculated for state s(m) of each replica processing unit, and multiple-spin flip processing is performed for each replica processing unit according to comparison between $\theta$num and $\theta$step.

Next, a processing procedure of the data processing apparatus 100 will be described.

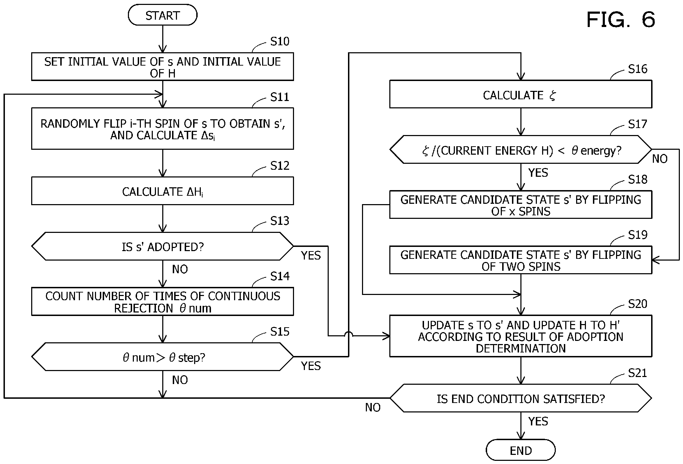

FIG. 6 is a flowchart illustrating a solution search example of the replica processing unit.

Although the processing of the replica processing unit 120 is exemplified below, the replica processing units 120a, ..., and 120n also execute a procedure similar to that of the replica processing unit 120.

(S10) The s holding unit 121 sets an initial value of state s. For example, the s holding unit 121 acquires an initial value of state s input by a user, and stores the initial value in the s storage unit 122. The H holding unit 123 sets an initial value of energy H. An initial value of energy H is the value of formula (1) corresponding to an initial value of state s. For example, the H holding unit 123 acquires an initial value of energy H input by a user, and stores the initial value in the H storage unit 124. A temperature value corresponding to the replica processing unit 120 is also set in the adoption determination unit 129.

(S11) The $s_i$ flip processing unit 125 acquires the current state s from the s holding unit 121, and supplies candidate state s' in which the i-th spin is randomly flipped for state s to the selection unit 126. The selection unit 126 supplies candidate state s' acquired from the $s_i$ flip processing unit 125 to the $\Delta s_i$ calculation unit 127. The $\Delta s_i$ calculation unit 127 calculates $\Delta s_i$ that is a difference between state s and candidate state s', and supplies $\Delta s_i$ to the $\Delta H_i$ calculation unit 128.

(S12) The $\Delta H_i$ calculation unit 128 calculates $\Delta H_i$ of formula (2) using $\Delta s_i$.

(S13) The adoption determination unit 129 performs determination of a transition to candidate state s' based on $\Delta H_i$. For example, the Metropolis method is used for the transition determination. When the transition to candidate state s' is adopted, the processing proceeds to step S20. When the transition to candidate state s' is not adopted, for example, is rejected, the processing proceeds to step S14.

(S14) The continuous rejection counting unit 131 counts the number of times of continuous rejection $\theta$num, which is the number of times that a transition is continuously rejected in step S13. In a case where step S14 is executed, candidate state s' created in step S11 is discarded.

(S15) The $\zeta$ calculation unit 132 determines whether $\theta$num > $\theta$step. When $\theta$num > $\theta$step, the processing proceeds to step S16. When $\theta$num $\leq$ $\theta$step, the processing proceeds to step S11.

(S16) The $\zeta$ calculation unit 132 calculates index value $\zeta$. For example, formula (4), (5), (6), or the like is used for the calculation of $\zeta$. Alternatively, the $\zeta$ calculation unit 132 may calculate as $\zeta = max(H_i(s)) - H(s)$. The max operator indicates that a maximum value of argument is selected. As still another example, the $\zeta$ calculation unit 132 may calculate as $\zeta = min(H_i(s)) - H(s)$.

(S17) The multiple-spin flip processing unit 133 determines whether $\zeta$/(current energy H) < $\theta$energy. When

ζ/(current energy H) < θenergy, the processing proceeds to step S18. When ζ/(current energy H) ≥ θenergy, the processing proceeds to step S19.

(S18) The multiple-spin flip processing unit 133 generates candidate state s' by flipping of x spins. x is an integer larger than two. At this time, for example, the multiple-spin flip processing unit 133 randomly selects x spins to be flipped. The processing proceeds to step S20.

(S19) The multiple-spin flip processing unit 133 generates candidate state s' by flipping of two spins. At this time, for example, the multiple-spin flip processing unit 133 randomly selects two spins to be flipped.

In a case where step S18 or step S19 is executed, $\Delta s_i$ corresponding to candidate state s' created by the multiple-spin flip processing unit 133 is supplied to the $\Delta H_i$ calculation unit 128 for each index i through the selection unit 126 and the $\Delta s_i$ calculation unit 127. The $\Delta H_i$ calculation unit 128 may calculate difference $\Delta H$ in energy between state s and candidate state s' based on each $\Delta s_i$.

(S20) When a result of the adoption determination by the adoption determination unit 129 is adoption, the s holding unit 121 updates the current state s to candidate state s'. For example, the s holding unit 121 stores candidate state s' in the s storage unit 122 as the new state s. When a result of the adoption determination is adoption, the H holding unit 123 updates the current energy H to energy H' corresponding to s'. For example, the H holding unit 123 stores energy H' in the H storage unit 124 as the new energy H.

Even in the case where step S18 or step S19 is performed, the adoption determination unit 129 may perform adoption determination by the Metropolis method or the like based on $\Delta H$. When candidate state s' is not adopted by the adoption determination unit 129, step S18 or step S19 may be repeatedly executed until candidate state s' is adopted. Alternatively, in the case where step S18 or step S19 is performed, the adoption determination unit 129 may determine that candidate state s' is adopted regardless of the adoption determination.

(S21) The $s_i$ flip processing unit 125 determines whether an end condition is satisfied. When the end condition is satisfied, the processing of the replica processing unit 120 ends. When the end condition is not satisfied, the processing proceeds to step S11. For example, the end condition is that the replica processing unit 120 has performed a certain number of times of trial of flipping, that a certain period of time has elapsed from the start of the first trial, or the like.

More commonly, in step S19, the multiple-spin flip processing unit 133 flips y (x > y ≥ 2) spins.

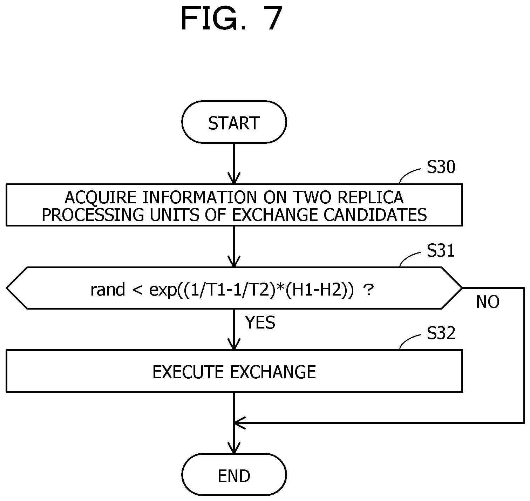

FIG. 7 is a flowchart illustrating an exchange control example.

At a predetermined timing in the repetition procedure in FIG. 6 by each replica processing unit, the exchange control unit 140 executes the following processing. For example, the following processing is executed for each pair of replica processing units with adjacent temperature values in the order of replica number for identifying each replica processing unit. For example, pairs of replica processing units to be subjected to exchange control are sequentially selected as in the pair of replica numbers (1, 2), the pair of replica numbers (2, 3), ....

(S30) The exchange control unit 140 acquires information on two replica processing units of exchange candidates. One of the two replica processing units is referred to as replica R1, and the other is referred to as replica R2. In this case, the information on replica R1 includes the state of replica R1 and information J1 associated with the state of replica R1 such as energy H1, temperature value T1, and a local solution. The information on replica R2 includes the state of replica R2 and information J2 accompanying the state of replica R2 such as energy H2, temperature value T2, and a local solution.

(S31) The exchange control unit 140 determines whether a determination formula of rand < exp((1/T1 - 1/T2) * (H1 - H2)) is satisfied. rand is a random number value in the section [0, 1]. When the determination formula is satisfied, the processing proceeds to step S32. When the determination formula is not satisfied, exchange control for the corresponding two replica processing units ends.

(S32) The exchange control unit 140 exchanges information other than the temperature values among the information acquired in step S30 for the corresponding two replica processing units. Accordingly, states s and pieces of information on energy H held in the corresponding two replica processing units are exchanged. Exchange control for the corresponding two replica processing units ends.

As described above, the exchange control unit 140 controls an exchange such that the exchange is stochastically performed by performing exchange determination by a determination formula using random number value rand.

When a solution search using each replica processing unit ends, the data processing apparatus 100 outputs the best solution obtained by the solution search, for example, the solution with the smallest energy, as a final solution. The data processing apparatus 100 may output a plurality of solutions by prioritizing solutions with low energy.

In the case where the SA method is used, the data processing apparatus 100 may execute solution finding by the procedure in FIG. 6 using the replica processing unit 120 alone. In the case where the SA method is used, the adoption determination unit 129 performs processing of decreasing temperature value T by, for example, $\Delta T$ from initial temperature value T = T0 at a predetermined timing in the repetition procedure in FIG. 6.

In steps S18 and S19, the multiple-spin flip processing unit 133 randomly selects a spin of a flip target when candidate state s' is created. Alternatively, the multiple-spin flip processing unit 133 may select a spin of a flip target based on energy $H_i(s)$ in a state where the spin of index i is flipped for state s.

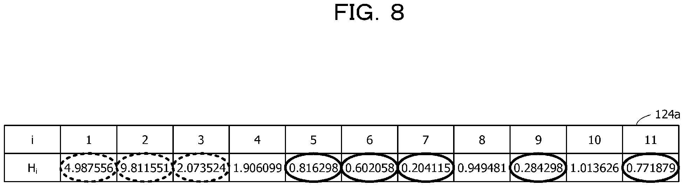

FIG. 8 is a diagram illustrating a selection example of a flip target spin.

For example, when $\zeta$/(current energy H) < $\theta$energy, the multiple-spin flip processing unit 133 may select and invert x spins in ascending order of $H_i$(s).

On the other hand, when $\zeta$/(current energy H) $\geq$ $\theta$energy, the multiple-spin flip processing unit 133 may select and invert y (y < x) spins in descending order of $H_i$(s).

Table 124a indicates an example of $H_i$(s). For example, table 124a may be created by the multiple-spin flip processing unit 133 and stored in the H storage unit 124. As an example, x = 5 and y = 3.

In the example of table 124a, when $\zeta$/(current energy H) < $\theta$energy, the multiple-spin flip processing unit 133 selects five spins corresponding to index i = 5, 6, 7, 9, 11 in ascending order of $H_i$(s). When $\zeta$/(current energy H) $\geq$ $\theta$energy, the multiple-spin flip processing unit 133 selects three spins corresponding to index i = 1, 2, 3 in descending order of $H_i$(s).

As described above, the multiple-spin flip processing unit 133 may further improve the efficiency of escape from a local solution by selecting a spin of a flip target based on $H_i$(s). For example, in a case where it is evaluated that a change amount of energy function in the vicinity of a local solution is relatively small, the possibility of returning to the original state s in the subsequent search is further reduced by selecting and flipping x spins in ascending order of $H_i$(s). In a case where it is evaluated that a change amount of energy function in the vicinity of a local solution is relatively large, the possibility of being transitioned to a state separated more than appropriate is further reduced by selecting and flipping y spins in descending order of $H_i$(s), and the possibility of missing a better solution is reduced.

The multiple-spin flip processing unit 133 may change the selection method of a spin according to a problem. For example, when $\zeta$/(current energy H) < $\theta$energy, the multiple-spin flip processing unit 133 may select and invert x spins in descending order of $H_i$(s). On the other hand, when $\zeta$/(current energy H) $\geq$ $\theta$energy, the multiple-spin flip processing unit 133 may select and invert y (y < x) spins in ascending order of $H_i$(s).

Alternatively, when $\zeta$/(current energy H) < $\theta$energy, the multiple-spin flip processing unit 133 may select and invert x spins in ascending order of $H_i$(s). On the other hand, when $\zeta$/(current energy H) $\geq$ $\theta$energy, the multiple-spin flip processing unit 133 may select and invert y (y < x) spins in ascending order of $H_i$(s).

As still another example, when $\zeta$/(current energy H) < $\theta$energy, the multiple-spin flip processing unit 133 may select and invert x spins in descending order of $H_i$(s). On the other hand, when $\zeta$/(current energy H) $\geq$ $\theta$energy, the multiple-spin flip processing unit 133 may select and invert y (y < x) spins in descending order of $H_i$(s).

The multiple-spin flip processing unit 133 may select a spin of a flip target by the following method and flip the selected spin.

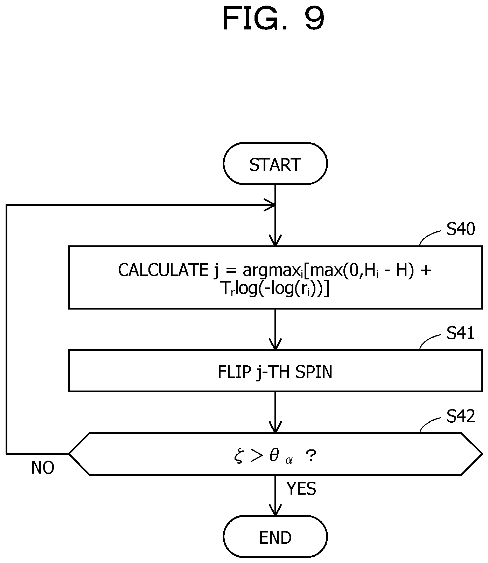

FIG. 9 is a flowchart illustrating a modification example of spin flip processing.

In the present modification example, the $\zeta$ calculation unit 132 calculates $\zeta$ by the following formula (7).

$$\zeta(\boldsymbol{s}) = \frac{1}{N} \sum_{i=1}^{N} \min\left(1, \exp\left(\frac{H_i - H}{T}\right)\right) \qquad (7)$$

$\zeta$ in formula (7) is an index value representing a probability that a transition may be made from a state of interest. If a state does not move, the value of $\zeta$ decreases.

The following steps S40 to S42 are executed in place of steps S16 to S19 in FIG. 6. Step S40 is executed when YES is determined in step S15.

(S40) The multiple-spin flip processing unit 133 calculates index j by formula (8).

$$j = \operatorname*{argmax}_{i}\left[\max(0, H_i - H) + T_r \log\big(-\log(r_i)\big)\right] \qquad (8)$$

$T_r$ is a temperature value of the corresponding replica processing unit 120. $r_i$ is a random number value of $0 < r_i < 1$ related to index i. $\operatorname{argmax}_i$ indicates that index i that maximizes an argument is selected.

(S41) The multiple-spin flip processing unit 133 flips the j-th spin.

(S42) The $\zeta$ calculation unit 132 calculates $\zeta$ by formula (7) for the state after flipping in step S41. The multiple-spin flip processing unit 133 determines whether $\zeta > \theta_\alpha$. $\theta_\alpha$ is a threshold determined in advance. When $\zeta > \theta_\alpha$, the spin flip processing ends. When $\zeta \leq \theta_\alpha$, the processing proceeds to step S40. In the case of proceeding to step S40, the energy corresponding to a state after flipping of the j-th spin in the immediately preceding step S41 is H, and the energy corresponding to a state obtained by flipping the i-th spin for the state after flipping is $H_i$.

As described above, the multiple-spin flip processing unit 133 may perform processing of determining the number of spins to be flipped based on a difference between the energy in the current state s and the energy in a state where one spin is flipped from state s, by the procedure illustrated in FIG. 9. The multiple-spin flip processing unit 133 flips a spin in a direction in which a mountain of an energy function becomes high, by setting index i satisfying the right side in formula (8) as j. When $\zeta$ is larger than threshold $\theta_\alpha$, the multiple-spin flip processing unit 133 determines that a state enough for a transition to be made has been reached, and ends the spin flip processing. Otherwise, the spin flip processing is repeated.

Accordingly, the data processing apparatus 100 may appropriately select a spin of a flip target so that a state transition is promoted. As a result, the data processing apparatus 100 may easily escape from a local solution, and achieve improvement in solution finding performance.

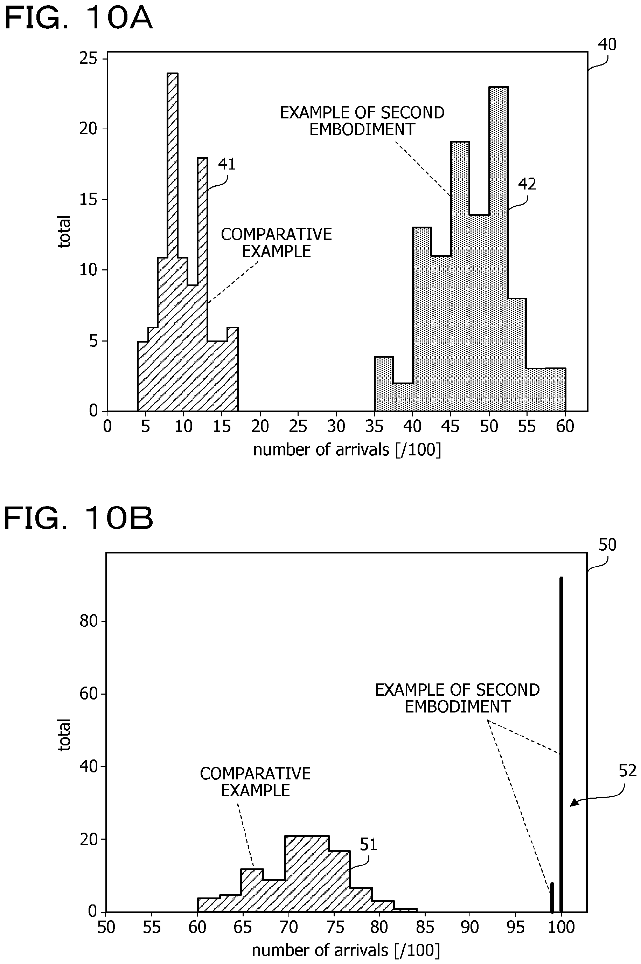

FIG. 10 (i.e., FIGs. 10A and 10B) is a diagram illustrating an example of an experiment result.

In the experiments, solution finding by exchange Monte Carlo (replica exchange method) in the method of related art and solution finding by exchange Monte Carlo in the method of the data processing apparatus 100 have been performed using a 16-spin type Sherrington-Kirkpatrick (SK) model. In the SK model, the number of local solutions is 495.

FIG. 10A illustrates graph 40 of a result of a first experiment. In the first experiment, a trial of state transition of 1,000 steps was repeated 100 times in each of the method of related art and the method of the data processing apparatus 100, and with this as one set, further 100 times of trial were performed. Graph 40 illustrates histograms 41 and 42 in which each set is classified by the number of times that a minimum solution (optimal solution) is obtained, and the number of sets classified in the number of times is accumulated. Histogram 41 is a comparative example of the case where the method of related art is used. Histogram 42 is the case where the method of the data processing apparatus 100 is used.

FIG. 10B illustrates graph 50 of a result of a second experiment. In the second experiment, the number of times of trial of state transition in the method of related art and the method of the data processing apparatus 100 was increased from 1,000 steps in the first experiment to 10,000 steps, and the other conditions were similar to those in the first experiment. Graph 50 illustrates histograms 51 and 52 in which each set of the second experiment is classified by the number of times that the minimum solution is obtained, and the number of sets classified in the number of times is accumulated. Histogram 51 is a comparative example of the case where the method of related art is used. Histogram 52 is the case where the method of the data processing apparatus 100 is used.

For the processing of the data processing apparatus 100 in the first experiment and the second experiment, the procedures exemplified in FIGs. 6 and 7 are used. Formula (4) is used for calculation of $\zeta$.

In each of graphs 40 and 50, the larger the number of bins on the right side in the drawing, the higher the frequency at which the minimum solution is obtained. As indicated by graphs 40 and 50, it has been confirmed by the experiments that the method of the data processing apparatus 100 is higher in the frequency of obtaining the minimum solution and is easier to obtain the minimum solution than the method of related art.

As described above, the data processing apparatus 100 may improve solution finding performance. For example, the data processing apparatus 100 may increase the possibility of reaching a minimum solution or an approximate solution close to the minimum solution in a short time. In this way, the data processing apparatus 100 may achieve speed-up of solution finding.

As described above, the data processing apparatus 100 executes the following processing. The following processing may be executed by a general-purpose processor such as the processor 101 or may be executed by a dedicated processor such as the processor 108a.

In a solution search based on an evaluation function including a plurality of state variables, the replica processing unit 120 detects that the number of times of occurrence of a first state within a predetermined time exceeds a predetermined number of times. The replica processing unit 120 determines the number of state variables for which value is to be changed from the first state, based on a difference between a first value of an evaluation function in a case where the value of any state variable of the plurality of state variables is changed from the first state and a second value of the evaluation function corresponding to the first state. For example, the number of state variables for which value is to be changed from the first state is two or more. For example, the replica processing unit 120 determines the number of state variables by using $\zeta$ calculated by the $\zeta$ calculation unit 132. The replica processing unit 120 generates a second state in which the values of state variables of the number among the plurality of state variables in the first state are changed. The replica processing unit 120 continues the solution search using the second state.

Accordingly, the data processing apparatus 100 may improve solution finding performance. The replica processing unit 120 may detect that the number of times of occurrence of the first state within a predetermined time exceeds a predetermined number of times, by comparing the number of times of continuous rejection $\theta$num with predetermined number of times $\theta$step as described before. Alternatively, in a case where a Rejection free method is used, when a search falls into a local solution, a behavior is repeated in which only the same state is adopted, or a state immediately returns to the same state even when the state transitions to another state. For this reason, in the case where the Rejection free method is used, the replica processing unit 120 may count the number of times that a state has become the first state after each trial within a predetermined time after the first state is reached, and detect that the number of times exceeds a predetermined number of times.

The replica processing unit 120 may calculate a statistical value of a difference between the first value and the second value, and determine the number of state variables for which value is to be changed from the first state based on the statistical value. For example, the statistical value is an average value, a maximum value, a minimum value, a median value, a percentile value, or the like. $\zeta$ in formula (4) represents an average value of differences between the first value and the second value. In a case where the maximum value of the difference between the first value and the second value is used, for example, $\zeta = \max(H_i(s)) - H(s)$. In a case where the minimum value of the difference between the first value and the second value is used, for example, $\zeta = \min(H_i(s)) - H(s)$.

Accordingly, the data processing apparatus 100 may appropriately determine the number of state variables for which value is to be changed from the first state, according to the gentleness/steepness of a change in the value of an evaluation function around the first state.

The replica processing unit 120 may easily obtain a statistical value by using any one of an average value, a maximum value, and a minimum value as the statistical value.

The replica processing unit 120 may compare a third value obtained by dividing the statistical value or an absolute value of the statistical value by a second value or an absolute value of the second value with a first threshold. When the third value is smaller than the first threshold, the replica processing unit 120 sets the number of state variables for which value is to be changed from the first state as a first number. On the other hand, when the third value is equal to or larger than the first threshold, the replica processing unit 120 sets the number of state variables for which value is to be changed from the first state as a second number smaller than the first number.

Accordingly, the data processing apparatus 100 may appropriately determine the number of state variables for which value is to be changed from the first state, according to the gentleness/steepness of a change in the value of an evaluation function around the first state. Threshold $\theta$energy described before is an example of the first threshold.

When the second state is generated, the replica processing unit 120 may randomly select a state variable for which value is to be changed.

Alternatively, when the second state is generated, the replica processing unit 120 may select a state variable for which value is to be changed based on the first value.

Accordingly, the data processing apparatus 100 may more efficiently perform escape from the first state estimated to be a local solution. The replica processing unit 120 may select a state variable for which value is to be changed based on the first value corresponding to a state variable other than the state variables considered when the number of state variables for which value is to be changed from the first state is determined.

The replica processing unit 120 may perform the following processing when the number of state variables for which value is to be changed from the first state is determined. The replica processing unit 120 performs first processing of selecting a first state variable for which value is to be changed from the first state, based on a difference between the first value and the second value, a random number value, and a temperature value used for a solution search. The replica processing unit 120 performs second processing of calculating an index value of a transition probability from a new first state to another state based on a difference between the first value and the second value in a case where the state obtained by changing the value of the selected first state variable is set as the new first state. The replica processing unit 120 repeatedly executes the first processing and the second processing until the index value is larger than a second threshold.

Accordingly, the replica processing unit 120 may efficiently determine the number of state variables for which value is to be changed, while selecting a state variable for which value is to be changed from the original first state estimated to be a local solution. The original first state is a first state immediately before the first execution of the first processing in the repetition of the first processing and the second processing.

For example, the replica processing unit 120 may cause forcible transition from the original first state to a state estimated to have a relatively high transition probability to the next state by repeating the first processing and the second processing, and may achieve efficient escape from a local solution (original first state). $\zeta$ in formula (7) is an example of the index value of a transition probability. Threshold $\theta_\alpha$ described before is an example of the second threshold. For example, the replica processing unit 120 may stochastically select a first state variable such that a state transition in which energy is large is prioritized, by using formula (8) for the selection of a first state variable.

The replica processing unit 120 may select a predetermined number of state variables from a plurality of state variables, and may calculate, for each of the predetermined number of state variables, a first value for a case where the value of the state variable is changed from the first state. The predetermined number may be the same number as the number of the plurality of state variables, or may be a number smaller than the number of the plurality of state variables. For example, the replica processing unit 120 may perform extraction of the predetermined number of state variables by a method such as extracting the state variables at intervals of c in the order of index as in formula (5), or may perform the extraction randomly from the plurality of state variables as in formula (6).

Accordingly, the data processing apparatus 100 may appropriately perform evaluation of a difference between the first value and the second value. For example, the data processing apparatus 100 may shorten the time taken for the evaluation of a difference between the first value and the second value by setting the predetermined number to a number smaller than the number of the plurality of state variables.

The replica processing units 120a, ..., and 120n may also execute processing similar to that of the replica processing unit 120. Instead of the replica exchange method, another solution search method such as the SA method may be executed by each replica processing unit.

In a normal solution search by the replica processing unit 120, it is conceivable that the number of state variables (spins) to be flipped at the same time is a predetermined number (t) of one or larger. In such case, when it is estimated that the search falls into a local solution, it is also conceivable that the replica processing unit 120 determines a number larger than the predetermined number (t) by the above-described method in determination of the number of state variables for which value is to be changed. For example, the replica processing unit 120 determines the number (v) of state variables for which value is to be changed from the first state, based on a difference between a first value of an evaluation function in a case where the values of any t state variables are changed from the first state and a second value of the evaluation function corresponding to the first state.

Also in this case, the replica processing unit 120 may obtain a statistical value of the difference, and compare a third value obtained by dividing the statistical value or an absolute value of the statistical value by a second value or an absolute value of the second value with a first threshold. When the third value is smaller than the first threshold, the replica processing unit 120 may set the number v of state variables for which value is to be changed from the first state as first number v1. v1 is a number larger than t (v1 > t). On the other hand, when the third value is equal to or larger than the first threshold, the replica processing unit 120 may set the number v of state variables for which value is to be changed from the first state as second number v2 smaller than first number v1 (v2 < v1). At this time, v2 may be a number larger than t (v2 > t). The replica processing unit 120 may generate a second state by changing the values of the state variables of the number (v1 or v2) determined in this manner, and may continue the solution search.

The information processing of the first embodiment may be achieved by causing the processing unit 12 to execute a program. The information processing of the second embodiment may be achieved by causing the processor 101 to execute a program. The program may be recorded in the computer-readable recording medium 113.

For example, the program may be circulated by distributing the recording medium 113 in which the program is recorded. The program may be stored in another computer, and the program may be distributed via a network. For example, a computer may store (install), in a storage device such as the RAM 102 or the HDD 103, the program recorded in the recording medium 113 or the program received from the other computer, and read the program from the storage device and execute the program.

**Claims**

1. A data processing program comprising instructions which, when executed by a computer, cause the computer to execute processing comprising:

   when a number of times of occurrence of a first state within a predetermined time exceeds a predetermined number of times in a solution search based on an evaluation function that includes a plurality of state variables, determining a number of state variables for which value is to be changed from the first state among the plurality of state variables, based on a difference between a first value of the evaluation function in a case where a value of any state variable of the state variables is changed from the first state and a second value of the evaluation function corresponding to the first state;
   generating a second state in which values of the state variables of the number among the plurality of state variables in the first state are changed; and
   continuing the solution search using the second state.

2. The data processing program according to claim 1, wherein
   the determining of the number includes determining the number based on a statistical value of the difference.

3. The data processing program according to claim 2, wherein
   the statistical value is any one of an average value, a maximum value, and a minimum value.

4. The data processing program according to claim 2, wherein
   the determining of the number includes:

   comparing a third value obtained by dividing the statistical value by the second value with a first threshold,
   when the third value is smaller than the first threshold, setting the number as a first number, and
   when the third value is equal to or larger than the first threshold, setting the number as a second number smaller than the first number.

5. The data processing program according to claim 1, wherein

the generating of the second state includes selecting, randomly or based on the first value, the state variables to be changed.

6. The data processing program according to claim 1, wherein
the determining of the number includes repeatedly executing, until the index value is larger than a second threshold, processing including:

selecting a first state variable for which value is changed from the first state based on the difference, a random number value, and a temperature value used for the solution search, and
calculating, based on the difference between the first value in a case where a state in which the value of the selected first state variable is changed is set as the new first state and the second value, an index value of a transition probability from the new first state to another state.

7. The data processing program0 according to claim 1, wherein
in the determining of the number, a predetermined number of state variables are selected from the plurality of state variables, and for each of the predetermined number of state variables, the first value in a case where values of the state variables are changed from the first state is calculated.

8. A data processing method implemented by a computer, the data processing method comprising:

when a number of times of occurrence of a first state within a predetermined time exceeds a predetermined number of times in a solution search based on an evaluation function that includes a plurality of state variables, determining a number of state variables for which value is to be changed from the first state among the plurality of state variables, based on a difference between a first value of the evaluation function in a case where a value of any state variable of the state variables is changed from the first state and a second value of the evaluation function corresponding to the first state;
generating a second state in which values of the state variables of the number among the plurality of state variables in the first state are changed; and
continuing the solution search using the second state.

9. A data processing apparatus comprising:

a storage unit configured to store a value of each of a plurality of state variables; and
a processing unit configured to perform processing including:

when a number of times of occurrence of a first state within a predetermined time exceeds a predetermined number of times in a solution search based on an evaluation function that includes the plurality of state variables, determining a number of state variables for which value is to be changed from the first state among the plurality of state variables, based on a difference between a first value of the evaluation function in a case where a value of any state variable of the state variables is changed from the first state and a second value of the evaluation function corresponding to the first state;
generating a second state in which values of the state variables of the number among the plurality of state variables in the first state are changed; and
continuing the solution search using the second state.

# FIG. 1

# FIG. 2

DATA PROCESSING APPARATUS — 100

PROCESSOR — 101

RAM — 102

HDD — 103

GPU — 104

INPUT INTERFACE — 105

MEDIUM READER — 106

COMMUNICATION INTERFACE — 107

BUS

ACCELERATOR CARD — 108

PROCESSOR — 108a

RAM — 108b

111

112

113

NETWORK — 114

# FIG. 3

ENERGY

30

STATE

00···00  00···01  00···10  ···  11···11

# FIG. 4

DATA PROCESSING APPARATUS 100

REPLICA PROCESSING UNIT 120

REPLICA PROCESSING UNIT 120a

REPLICA PROCESSING UNIT 120n

EXCHANGE CONTROL UNIT 140

FIG. 5

REPLICA PROCESSING UNIT

130

$\Delta H_i$ CALCULATION UNIT 128

CONTINUOUS REJECTION COUNTING UNIT 131

ADOPTION DETERMINATION UNIT 129

$\Delta s_i$ CALCULATION UNIT 127

$\zeta$ CALCULATION UNIT 132

H HOLDING UNIT 123

SELECTION UNIT 126

MULTIPLE-SPIN FLIP PROCESSING UNIT 133

s HOLDING UNIT 121

H STORAGE UNIT

H INITIAL VALUE 124

$s_i$ FLIP PROCESSING UNIT 125

s STORAGE UNIT

s INITIAL VALUE 122

120

FIG. 6

START

SET INITIAL VALUE OF s AND INITIAL VALUE OF H — S10

RANDOMLY FLIP i-TH SPIN OF s TO OBTAIN s', AND CALCULATE $\Delta s_i$ — S11

CALCULATE $\Delta H_i$ — S12

IS s' ADOPTED? — S13
YES
NO

COUNT NUMBER OF TIMES OF CONTINUOUS REJECTION $\theta$ num — S14

$\theta$ num > $\theta$ step? — S15
YES
NO

CALCULATE $\zeta$ — S16

$\zeta$ /(CURRENT ENERGY H) < $\theta$ energy? — S17
YES
NO

GENERATE CANDIDATE STATE s' BY FLIPPING OF x SPINS — S18

GENERATE CANDIDATE STATE s' BY FLIPPING OF TWO SPINS — S19

UPDATE s TO s' AND UPDATE H TO H' ACCORDING TO RESULT OF ADOPTION DETERMINATION — S20

IS END CONDITION SATISFIED? — S21
NO
YES

END

# FIG. 7

START

ACQUIRE INFORMATION ON TWO REPLICA PROCESSING UNITS OF EXCHANGE CANDIDATES ⌐ S30

rand < exp((1/T1-1/T2)*(H1-H2)) ? ⌐ S31

NO

YES

EXECUTE EXCHANGE ⌐ S32

END

FIG. 8

| i | 1 | 2 | 3 | 4 | 5 | 6 | 7 | 8 | 9 | 10 | 11 |
|---|---|---|---|---|---|---|---|---|---|---|---|
| $H_i$ | 4.987556 | 9.811551 | 2.073524 | 1.906099 | 0.816298 | 0.602058 | 0.204115 | 0.949481 | 0.284298 | 1.013626 | 0.771879 |

124a

# FIG. 9

START

S40

CALCULATE $j = \text{argmax}_i[\max(0, H_i - H) + T_r \log(-\log(r_i))]$

S41

FLIP j-TH SPIN

S42

$\zeta > \theta_\alpha$ ?

NO

YES

END

## FIG. 10A

## FIG. 10B

**EUROPEAN SEARCH REPORT**

Europäisches Patentamt
European Patent Office
Office européen des brevets

Application Number

EP 24 18 5946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/012291 A1 (SAZAWA SHINICHI [JP]) 13 January 2022 (2022-01-13) * paragraph [0028] - paragraph [0208]; figures 8-12 * | 1-9 | INV. G06N5/01 G06N7/01 |
| A | SALAMA MOHAMED ET AL: "Adaptive neighborhood simulated annealing for sustainability-oriented single machine scheduling with deterioration effect", APPLIED SOFT COMPUTING, ELSEVIER, AMSTERDAM, NL, vol. 110, 30 June 2021 (2021-06-30), XP086773792, ISSN: 1568-4946, DOI: 10.1016/J.ASOC.2021.107632 [retrieved on 2021-06-30] * the whole document * | 1-9 | |
| A | US 2021/365605 A1 (HANDA SATOSHI [JP]) 25 November 2021 (2021-11-25) * the whole document * | 1-9 | TECHNICAL FIELDS SEARCHED (IPC) G06N |

The present search report has been drawn up for all claims

| Place of search | Date of completion of the search | Examiner |
|---|---|---|
| The Hague | 13 December 2024 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 18 5946

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| US 2022012291 A1 | 13-01-2022 | CN | 113919504 A | 11-01-2022 |
| | | EP | 3937090 A1 | 12-01-2022 |
| | | JP | 2022015503 A | 21-01-2022 |
| | | US | 2022012291 A1 | 13-01-2022 |
| US 2021365605 A1 | 25-11-2021 | CN | 113705851 A | 26-11-2021 |
| | | EP | 3913506 A1 | 24-11-2021 |
| | | JP | 2021184148 A | 02-12-2021 |
| | | US | 2021365605 A1 | 25-11-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022174616 A
- JP 2023049630 A
- US 20220198246
- US 20210342505